# EUROPEAN PATENT APPLICATION

(11) **EP 4 398 596 A1**
(43) Date of publication of application: **10.07.2024**
(21) Application number: 22865092.5
(22) Date of filing: 02.09.2022
(51) Int. Cl.: H04Q 1/14, H04Q 1/20

(54) **DISTRIBUTION DEVICE CONNECTED TO CONNECTOR, AND SERVER DEVICE AND METHODS FOR MANAGING CONNECTION STATUS THEREOF**

(30) Priority: 03.09.2021 KR 20210117960
(71) Applicant: Quansol Inc., Gwangju 61011 (KR)
(72) Inventor: KIM, Kyungseon, Ansan-si Gyeonggi-do 15277 (KR); PARK, Yu Jin, Osan-si, Gyeonggi-do 18105 (KR)
(74) Representative: Dragotti & Associati S.R.L.
(86) International application number: PCT/KR2022/013201
(87) International publication number: WO 2023/033590

(57) **Abstract**

Disclosed is a coupling-type distribution device that may be coupled to a distribution box including a plurality of ports. The device includes a main body formed with a fastening portion for fastening with the distribution box, a plurality of openings distributed on the main body so as to correspond to arrangement positions of the plurality of ports while being connected to the distribution box, a reader portion configured to read a tag of a connector and detect identification information recorded on the tag, and a communication portion configured to transmit, to a server device, the identification information detected by the reader portion and port information of a port to which the connector is connected. Accordingly, it is possible to facilitate management of the distribution device.

## Description

### [Technical Field]

The present disclosure relates to a distribution device connected to a connector, and a server device and methods for managing a connection status thereof.

### [Background Art]

Thanks to the development of communication technology, various types of communication devices are being used in ordinary homes and companies. These communication devices are connected and used through external circuit lines and lines. Line connections are made by distribution devices.

However, in an environment where there are many households and various communication lines, finding a correct port among ports in the distribution device and connecting to a communication connector is not an easy task. In particular, when communication lines change due to moving in or out of households, the connector may be connected to a wrong port.

Currently, a line number sheet is used to manage a port connection status. However, because writing and management of the line number sheet are generally done by hand, there are problems in that poor handwriting makes it difficult for others to understand, and when the writing is omitted or the line number sheet is incorrectly written, it is difficult for a successor to find an error.

Accordingly, the need for technology to effectively manage a connection status of a distribution device has emerged.

### [Disclosure]

### [Technical Problem]

In accordance with the above-described needs, it is an object of the present disclosure is to provide a distribution device, a server device, and methods capable of accurately connecting a connector to each port of the distribution device and effectively managing a connection status thereof.

### [Technical Solution]

In order to achieve the above object, a coupling-type distribution device according to an embodiment of the present disclosure includes a main body formed with a fastening portion for fastening with a distribution box including a plurality of ports, a plurality of openings distributed on the main body, a reader portion configured to read a tag of a connector to be connected to one of the ports of the distribution box and detect identification information recorded on the tag through one of the plurality of openings while the main body is coupled to the distribution box by the fastening portion, and a communication portion configured to transmit, to a server device, the identification information detected by the reader portion and port information of the port to which the connector is connected.

Here, the coupling-type distribution device may further include a plurality of sensing members provided on the main body so as to correspond to positions of the plurality of ports while the main body is coupled to the distribution box, and a controller . In this case, each of the plurality of sensing members may provide a signal according to insertion of the connector to the controller when the connector passes through a corresponding opening and is connected to the port, the reader portion may be disposed on one side of the main body, when the connector is tagged in the reader portion before being inserted into the corresponding opening, may detect the identification information recorded on the tag of the connector, and provide the identification information to the controller, and the controller may transmit, to the server device, the identification information of the connector provided from the reader portion and port information corresponding to a position of each of the sensing members providing the signal through the communication portion.

In addition, the size of each of the plurality of openings may be a size that covers at least one port, and the reader portion may include a plurality of readers disposed on a side surface in a direction of the tag of the connector connected to each of the ports among inner side surfaces of the plurality of openings.

In addition, the reader portion may include a plurality of readers respectively disposed on a plurality of protrusions protruding from peripheral surfaces of the plurality of openings on the main body.

In addition, the coupling-type distribution device may further include a plurality of light emitting portions provided in the main body so as to correspond to arrangement positions of the plurality of ports, and the controller may cause a light emitting portion corresponding to the port into which the connector is inserted to emit light.

Alternatively, when a normal insertion position of the connector and a position of the port into which the connector is inserted are the same, the controller may cause a light emitting portion corresponding to the port into which the connector is inserted to emit light in a first color, and when the normal insertion position of the connector and the position of the port into which the connector is inserted are different, the light emitting portion corresponding to the port into which the connector is inserted to emit light in a second color, and a light emitting portion corresponding to the normal insertion position to emit light in the first color.

According to an embodiment of the present disclosure, a server device for communicating with a distribution device includes a communication portion, a memory, and a processor. Here, the communication portion may receive the identification information and port information of the port to which the connector is coupled from the distribution device when a connector to which a tag with identification information recorded is attached is coupled to one of ports of the distribution device, and the processor may generate a line number sheet with respect to the distribution device based on the received identification information and port information and store the line number sheet in the memory.

In addition, the processor may compare the received port information with reference port information stored in the memory, and, when it is determined that the connector is incorrectly coupled, transmit the port information corresponding to the connector to the distribution device through the communication portion.

According to an embodiment of the present disclosure, a connector connecting method of a distribution device comprising a plurality of ports includes reading a tag attached to each of connectors connected to the plurality of ports and detecting identification information recorded on the tags, transmitting the detected identification information to a server device, and transmitting port information of the port to which the connector is connected to the server device.

Here, the connector connecting method may further include, when an actual insertion position of the connector having the identification information is the same as a normal insertion position, causing a light emitting portion corresponding to the actual insertion position of the connector among a plurality of light emitting portions arranged for the plurality of ports to emit light in a first color, and when the actual insertion position is different from the normal insertion position, the light emitting portion corresponding to the actual insertion position to emit light in a second color and a light emitting portion corresponding to the normal insertion position to emit light in the first color.

According to an embodiment of the present disclosure, a managing method of a server device communicating with a distribution device includes, when a connector to which a tag with identification information recorded is attached is coupled to one of ports of the distribution device, receiving the identification information from the distribution device, receiving port information of the port to which the connector is coupled from the distribution device, and generating and storing a line number sheet with respect to the distribution device based on the received identification information and port information.

Here, the managing method may further include comparing the received port information with previously stored reference port information, and, when it is determined that the connector is incorrectly coupled, transmitting the port information corresponding to the connector to the distribution device.

### [Advantageous Effects]

According to various embodiments of the present disclosure as described above, it is possible to accurately and efficiently manage the connection status of the connector of the distribution device.

### [Description of Drawings]

FIG. 1 is a diagram for explaining an operation of a distribution device according to an embodiment of the present disclosure,
FIG. 2 is a diagram for explaining a configuration of a coupling-type distribution device according to an embodiment of the present disclosure,
FIGS. 3 to 6 are diagrams for explaining a configuration of a distribution device according to an embodiment of the present disclosure,
FIG. 7 is a block diagram showing a configuration of a distribution device according to an embodiment of the present disclosure,
FIG. 8 is a block diagram showing a configuration of a server device according to an embodiment of the present disclosure,
FIG. 9 is a diagram for explaining a method of recording identification information using a terminal device,
FIG. 10 is a flowchart for explaining a connector connecting method of the distribution device, and
FIG. 11 is a flowchart for explaining a managing method of the server device.

### [Best Mode]

The terms used herein will be briefly described, and the present disclosure will be described in detail.

Although general terms used in the present disclosure are selected to describe an embodiment in consideration of the functions thereof, these general terms may vary according to intentions of one of ordinary skill in the art, legal or technical interpretation, the advent of new technologies, etc. Some terms are arbitrarily selected by the applicant of the embodiment. In this case, the meaning will be described in detail in the description of the present disclosure. Accordingly, the terms used in the present disclosure should be defined based on the meaning of the term, not on the name of a simple term, but on the entire contents of the disclosure.

The embodiments of the present disclosure may be variously modified and may be various, and a specific embodiment is illustrated in the drawings and described in detail in the detailed description. However, this is not intended to limit the scope to a specific embodiment, and should be understood to include all modifications, equivalents, and substitutes included in the disclosed spirit and technical scope. In describing the embodiments, when it is determined that a detailed description of related known technology may obscure the gist, the detailed description is omitted.

Terms such as first and second may be used to describe various components, but the components should not be limited by the terms. Terms are used only for the purpose of distinguishing one component from another.

The singular forms "a", "an" and "the" include plural forms unless the context clearly dictates otherwise. In the present application, the terms "include" or "configure" etc., specify the presence of a feature, a number, a step, an operation, an element, a component, or a combination thereof but do not preclude the presence or addition of one or more features, numbers, steps, operations, components, parts, or combinations thereof.

In the present disclosure, the terms "module" or "part" may perform at least one function or operation and may be implemented as hardware, software, or a combination of hardware and software. Also, a plurality of "modules" or a plurality of "parts" may be implemented as at least one processor integrated into at least one module, except for a "module" or a "part" that is necessarily implemented as specific hardware.

Hereinafter, with reference to the accompanying drawings, an embodiment of the present disclosure will be described in detail so that those skilled in the art may easily carry out the present disclosure. However, the present disclosure may be implemented in many different forms and is not limited to the embodiment described herein. Also, in order to clearly describe the present disclosure in the drawings, parts irrelevant to the description are omitted, and similar reference numerals are attached to similar parts throughout the specification.

Hereinafter, the present disclosure will be described in more detail with reference to the drawings.

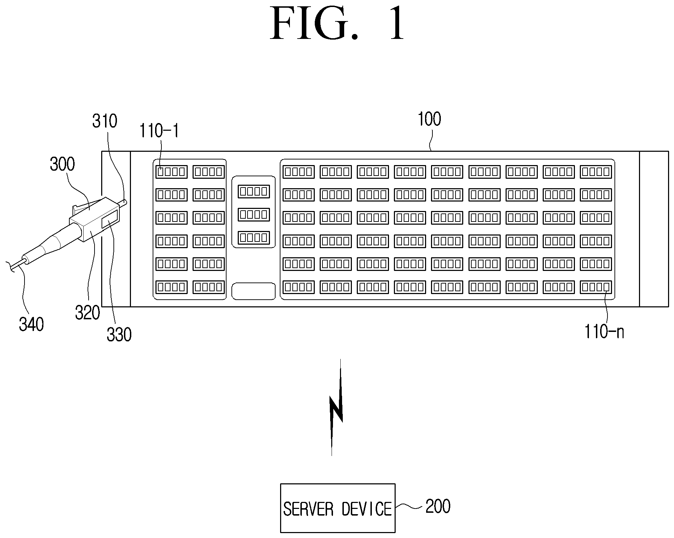

FIG. 1 is a diagram for explaining an operation of a distribution device according to an embodiment of the present disclosure. According to FIG. 1, a distribution device 100 includes a plurality of ports 110-1 to 110-n. The distribution device 100 is a device for connecting external communication lines and internal communication lines in a network according to various communication standards. Specifically, the distribution device 100 performs functions such as grouping signals or dividing signals to send from multiple digital units to one wireless unit. Alternatively, the distribution device 100 is called a distribution box, a data distribution frame (DDF), a smart DDF, etc., but in this specification, is collectively referred to as a distribution device.

The distribution device 100 in FIG. 1 has a structure connectable to the ports on the front and the back. When an external line is connected to the back of one port and an internal line is connected to the front, a communication line between an external network and an internal device is connected through the port.

According to the present embodiment, an internal line side connector 300 includes a tag 330. The connector 300 includes an insertion portion 310 connected to a pad within the port, a body portion 320 supporting the insertion portion 310, and a wire 340 connected to the insertion portion 310 through the body portion 320, and the tag 330 may be provided on the body portion 320.

According an embodiment, the tag may be implemented as a Near Field Communication (NFC) module such as an RF tag. The tag may be manufactured integrally with the connector 300, but according to an example, may be manufactured in the form that is simply attachable and detachable, such as a sticker, attached to the connector 300, and used. According to another example, the tag may be implemented in the form of a sticker with a pattern drawn thereon to provide identification information, such as a barcode or a QR code. Identification information used to be able to identify the corresponding connector 300 is recorded on the tag 330. The identification information may include various information such as a connector ID, a connector name, a description, installation position, etc. When the tag 330 is implemented as an RF tag, the tag 330 may include a coil (not shown) that acts as an antenna and an IC chip capable of reading/writing through the coil. When the tag 330 is implemented as an active RF tag, the tag 330 may further include a battery.

As such, when the connector 300 attaching or including the tag is connected to the distribution device 100, the distribution device 100 reads the identification information of the tag, and transmits port information of a port to which the connector is connected, and the read identification information of the tag to a server device 200. The server device 200 may be a server operated by a communication company that manages communication lines, or a server used by a building manager or a communication manager. Alternatively, the server device 200 may be implemented as a wireless terminal device such as a mobile phone, a tablet, or a laptop PC owned by an installation engineer for connecting communication lines.

The server device 200 generates and stores a line number sheet based on information received from the distribution device 100. The line number sheet refers to a file that records line number information that indicates which line each line is used for or whether each line is in an unused status in the distribution device 100.

After generating the line number sheet during initial installation, whenever a connection relationship between connectors and ports changes, such as when a connector is disconnected and connected to a different port, a new connector is connected to a new port, or a line number changes according to an emergency situation, the server device 200 may update the line number sheet by recording relevant information along with the date and time of such change.

As shown in FIG. 1, when the distribution device 100 accurately recognizes connection information between the connector and the ports based on the identification information of each connector and provides the connection information to the server device, generation and update of the line number sheet based on the connection information are also accurately performed. Therefore, as in the related art, it is possible to prevent the risk of line number information being incorrectly written, omitted, or lost due to a manager's mistake.

The distribution device 100 includes a reader to recognize a tag of each connector. An arrangement position of the reader and a recognition method based on the arrangement position may be changed in various ways according an embodiment, which will be explained in detail below.

Meanwhile, in FIG. 1, a case where the distribution device itself including the ports includes the reader and a communication portion (not shown) is illustrated and explained, but there are cases where the distribution device itself does not include such additional components. In this case, the above-described operation may be performed in a coupling-type distribution device.

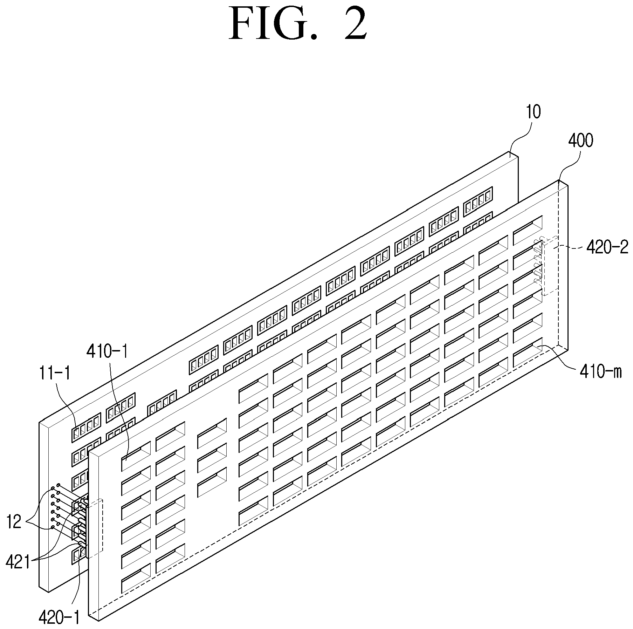

FIG. 2 is a diagram for explaining a configuration of a coupling-type distribution device according to an embodiment of the present disclosure. According to FIG. 2, a coupling-type distribution device 400 is manufactured in a structure that may be coupled to a distribution box 10 including a plurality of ports.

The coupling-type distribution device 400 has a structure that may be coupled to the distribution box 10 on the back of a main body or on the top, bottom, left, and right sides. FIG. 2 shows a case in which two fastening portions 420-1 and 420-2 are formed on both edges of the back of the main body, but the number, positions, and shapes of the fastening portions may be modified in various ways.

According to FIG. 2, the fastening portions 420-1 and 420-2 each include a plurality of pins 421. A user may connect the coupling-type distribution device 400 to an upper side of the distribution box 10 by respectively inserting the plurality of pins 421 into a plurality of holes 12 provided in an upper surface of the distribution box 10. When the distribution box 10 is a conventional distribution device, the user may drill the hole 12 at the edge of the distribution box 10 and then directly connect the coupling-type distribution device 400 to the distribution box 10.

FIG. 2 shows a coupling form using the pin, but according to another example, the fastening portion may be implemented as a structure coupled to the distribution box 10 by using a magnetic force, or may be implemented as an adhesive member with an adhesive force, etc. and attached to the distribution box 10. In addition, the fastening portion may be connected to the distribution box 10 by general fastening members such as bolts and nuts.

The coupling-type distribution device 100 includes a plurality of openings 410-1 to 410-m. Each opening may be formed to correspond to the position and size of a port provided in the distribution box 10. That is, when a main body of the coupling-type distribution device 100 is coupled to the distribution box 10, because each of the ports 11-1 of the distribution box 10 is located in a lower side of each of the openings 410-1 to 410-m, a connector may pass through the opening and be inserted into a lower port. When gaps between the ports are tight compared to the size of the connector, because widths of boundaries between the ports become narrow, it may be difficult to generate boundaries between the openings in the coupling-type distribution device 100. In this case, shapes and sizes of the openings are implemented to cover multiple ports.

Accordingly, FIG. 2 shows that one opening is implemented in a shape and size that covers a total of four ports. However, the number and size of the openings are not necessarily limited thereto, and one opening may be formed to correspond to one port. In this case, m number of the openings is equal to n number of the ports. The connector must be inserted into the port by passing through the opening, and thus, the size of the opening may be manufactured to be larger than the port in consideration of the size of the connector.

The coupling-type distribution device of FIG. 2 also includes a reader portion and a communication portion, and may provide information for generating and managing line numbers to the server device 200.

As described above, according to various embodiments of the present disclosure, the distribution device may be implemented as a device including a port itself, or may be implemented in the form of a coupling-type distribution device supplementing a function of the distribution device by connecting to a distribution device having a port, that is, a distribution box. Hereinafter, for convenience of explanation, examples of various detailed configurations and operations will be described with respect to the case where the distribution device is implemented as a coupling-type distribution device, but these descriptions may be equally applied to a distribution device having a direct port as shown in FIG. 1.

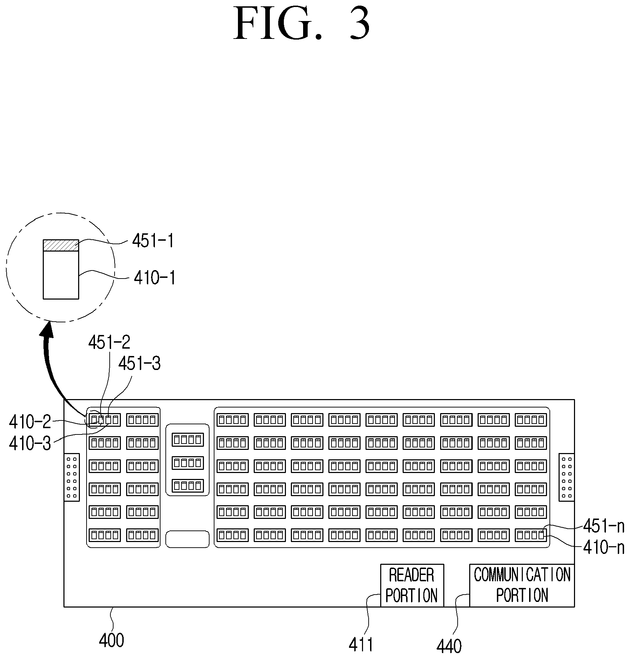

FIG. 3 shows a configuration of a coupling-type distribution device according to an embodiment of the present disclosure. According to FIG. 3, the coupling-type distribution device 400 includes the plurality of openings 410-1 to 410-n, a plurality of sensing members 451-1 to 451-n, a reader portion 411, and a communication portion 440. In FIG. 3, because openings match ports one-to-one, the number of openings is n, which is the same as the number of ports. Accordingly, reference numerals are also indicated as 410-1 to 410-n.

The plurality of sensing members 451-1 to 451-n are respectively provided in the plurality of openings 410-1 to 410-n. FIG. 3 shows that the sensing members 451-1 to 451-n are respectively disposed on one side inside the openings 410-1 to 410-n, but arrangement positions may change according to types of the sensing members 451-1 to 451-n. For example, the sensing members 451-1 to 451-n may be implemented as pads that contact a part of a connector when the connector is inserted. Accordingly, a signal corresponding to contact with the connector may be provided to a controller (not shown). Specifically, a resistance value or a capacitance value changes according to the contact with the connector, and the controller (not shown) recognizes the resulting change in an electrical signal, and may determine whether to insert the connector based on a value of the change. For another example, the pad may be implemented as a magnetic material, magnetically coupled to the connector, and provide a signal according to a change in magnetic flux to the controller. For another example, the sensing members 451-1 to 451-n may be implemented as photodiodes. Specifically, a light emitting diode and a light receiving diode may be disposed inside an opening to detect whether the connector is inserted. Alternatively, the sensing members 451-1 to 451-n may be formed in the openings in a concavo-convex structure and implemented to support the connector while being coupled to a part of the connector when the connector is inserted and provide an electrical signal according to coupling to the controller.

On the other hand, as described above, when one opening is manufactured to have a size enough to cover several ports, several sensing members may be provided within one opening. In this case, each sensing member may be disposed at a position corresponding to a position of each port within one opening.

The reader portion 311 is disposed on one side of the main body. A user may first tag the reader portion 311 before inserting the connector into the opening. When the connector is tagged, the reader portion 311 detects identification information recorded on the tag and provides the identification information to the controller. The reader portion 311 may be implemented in various forms according to a type of the tag of the connector. When the tag is an RFID tag, the reader portion 311 may be implemented as an RFID reader including an antenna, and when the tag is a barcode or a QR code, the reader portion 311 may be implemented as a barcode reader or a QR code reader for reading the tag.

When insertion of the connector is sensed in one sensing member within a certain time from the time tagged by the reader portion 311, the controller may determine that the connector with tagged identification information has been inserted into a port corresponding to the sensing member. Accordingly, the controller transmits the tagged identification information and port information corresponding to a position of the sensing member where a signal occurred to a server device through the communication portion 440.

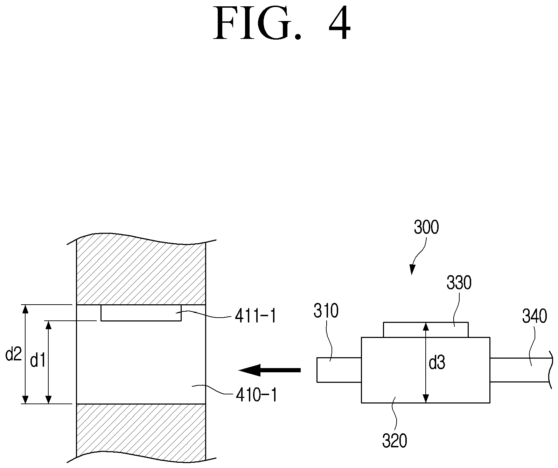

FIG. 4 shows a configuration of the coupling-type distribution device according to another embodiment of the present disclosure. FIG. 4 is a side view of the coupling-type distribution device. According to the embodiment of FIG. 4, the reader portion 411 includes a plurality of readers 411-1. As described above, when openings match ports one-to-one, each reader may be disposed for each opening, and when an opening is in the form to cover several ports, several readers may be disposed within one opening. In this case, the arrangement position of each reader is determined to correspond to a position of a port when a main body is coupled to a distribution box. Hereinafter, a case where ports match openings one-to-one will be described.

A plurality of readers immediately detect identification information of a connector coupled to each opening and provide the identification information to a controller, and the controller transmits port information corresponding to a position of a reader where the identification information is detected and identification information detected by the corresponding reader to a server device through the communication portion 440. According to FIG. 4, there is no need to provide a separate sensing member instead of using a plurality of readers.

The position of each reader is implemented in various ways according an embodiment. FIG. 4 shows a side cross-sectional view of the first opening 410-1, which is one of the plurality of openings. As described above, because the connector needs to pass through an opening and be coupled to a rear port, the size of the first opening 410-1 needs to be large enough to allow the connector 310 to sufficiently pass through. In addition, when inserting the connector 310, because the tag 330 and the reader 411-1 need to contact with each other or be located at a sufficiently close distance, the reader 411-1 is disposed on a side surface in a direction of the tag 330 of the connector 310 among inner side surfaces of the first opening 410-1. Therefore, a width d1 in a width d2 of the opening excluding the size of the reader 411-1 needs to be at least equal to or greater than a width d3 of the body portion 320 and the tag 330 of the connector 310.

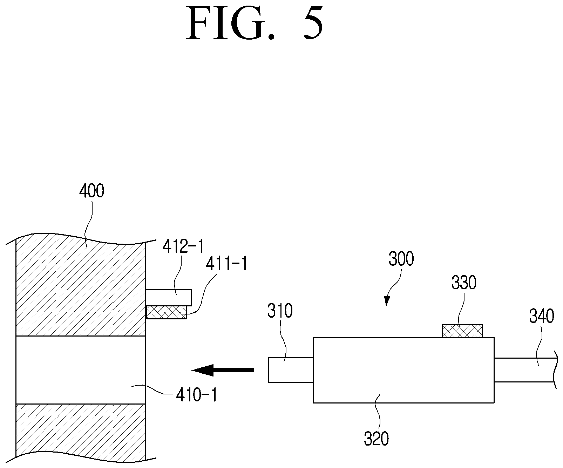

FIG. 5 shows a configuration of the coupling-type distribution device according to another embodiment of the present disclosure. Like FIG. 4, FIG. 5 also provides a plurality of readers. Each reader includes a plurality of readers respectively disposed on a plurality of protrusions provided on a main body. A protrusion is formed around an opening so as to be disposed directly or in close proximity to a tag of a connector.

Referring to FIG. 5, one protrusion 412-1 is formed on a peripheral surface of the first opening 410-1, and the reader 411-1 is disposed on one side of the protrusion 412-1. The size of the protrusion and an arrangement position of the reader may vary according to a length of the body portion 320 of the connector 310 and an arrangement position of the tag 330. As described above, when the tag 330 is in the form of a sticker attached to the connector 310, the tag 330 needs to be attached in correct direction and position on the connector 310 in accordance with the arrangement position and direction of the reader of the protrusion.

Meanwhile, according to another embodiment of the present disclosure, the coupling-type distribution device may further include a light emitting portion and provide various information such as whether a port has been properly inserted and an exact insertion position.

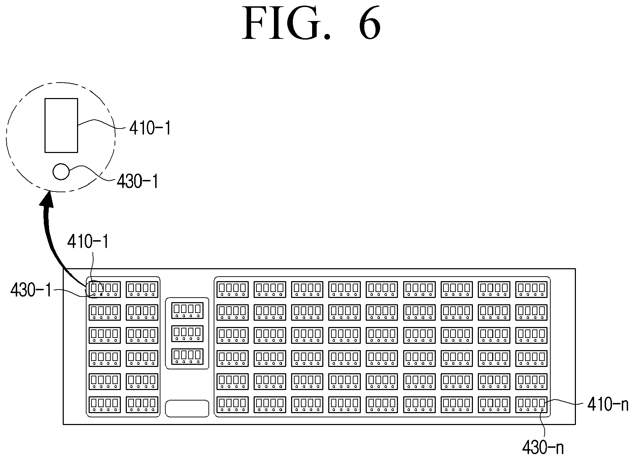

FIG. 6 shows a configuration of the coupling-type distribution device according to another embodiment of the present disclosure. Like FIG. 3, FIG. 6 also shows a case where sizes and number of openings are implemented to correspond to those of ports, but is not necessarily limited thereto.

According to FIG. 6, the coupling-type distribution device includes a plurality of light emitting portions 430-1 to 430-n respectively provided in the plurality of openings 410-1 to 410-n. A controller may perform a control operation of emitting light in a light emitting portion corresponding to an opening into which a connector is inserted.

Each of the light emitting portions may be implemented as a single light emitting diode, but may also be implemented as a set of light emitting diodes of several colors. The controller may provide various notifications related to port insertion by changing a blinking status, a blinking speed, or color of each of the light emitting portions. The light emitting portions shown in FIG. 6 may be coupled to at least one of various embodiments described in FIGS. 1 to 5 or may be implemented independently.

Meanwhile, as described above, when one opening is manufactured to be large enough to cover several ports, several light emitting portions may be disposed in one opening. In this case, each light emitting portion may be disposed at a position corresponding to a position of each port outside one opening. In addition, various notification methods using a light emitting portion will be explained in detail below.

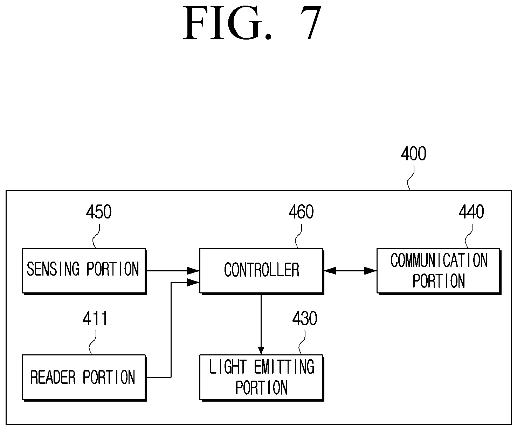

FIG. 7 is a block diagram showing a configuration of the coupling-type distribution device according to an embodiment of the present disclosure. According to FIG. 7, the coupling-type distribution device 400 includes the reader portion 411, a light emitting portion 430, the communication portion 440, a sensing portion 450, and a controller 460. For convenience of explanation, external components such as a main body, an opening, a fastening portion, etc. are omitted. In addition, FIG. 7 is the block diagram of all components described in an embodiment described above, but some components may be omitted according to a combination of an embodiment. For example, when the reader portion 411 is implemented as including a plurality of readers as shown in FIGS. 4 and 5, a component such as the sensing portion 450 including a plurality of sensing members may be omitted..

The reader portion 411 is configured to read a tag of a connector. According an embodiment, the reader portion 411 may include one reader or a plurality of readers, and may be implemented to include a control circuit that controls a driving status of each reader.

The controller 460 may control an operation of the coupling-type distribution device in conjunction with a server device through the communication portion 440. The controller 460 may be implemented as a simple control circuit or may be implemented as including a memory and a processor.

Specifically, when the reader portion 411 detects identification information of the connector, the controller 460 transmits the identification information and port information of a port into which the connector is inserted to the server device through the communication portion 440. The server device may determine whether the identification information of the connector matches the port information and transmit a control signal accordingly. The controller 460 controls the light emitting portion 430 corresponding to an opening into which the connector is inserted according to the control signal transmitted from the server device.

Specifically, when a normal insertion position of the connector and a position of the opening into which the connector is inserted are the same, the controller 460 causes a light emitting portion corresponding to the opening into which the connector is inserted to emit light in a first color (e.g., green). On the other hand, when the normal insertion position and an actual insertion position are different, the controller 460 causes a light emitting portion corresponding to the actual insertion position to emit light in a second color (e.g., red). In this case, the controller 460 may cause the light emitting portion corresponding to the normal insertion position to emit light in the first color and guide a user to insert the connector at the normal insertion position.

According to another embodiment, the controller 460 may adjust a blinking status of a light emitting portion other than the color. For example, when the connector is inserted incorrectly, the controller 460 may control the corresponding light emitting portion to blink. In addition, the controller 460 may turn on the light emitting portion at the normal insertion position to guide the user to insert the connector through the opening.

Meanwhile, the embodiment of FIG. 6 shows that a light emitting portion is provided for each opening, but only one light emitting portion 430 may be included. In this case, the controller 460 may control the light emitting portion 450 to blink only once or to display green when the connector is normally inserted. On the other hand, when the connector is inserted incorrectly, the controller 460 may control the light emitting portion 450 to continuously blink or to display red. Accordingly, the user may check once again where the normal position is and then insert the connector into the correct position.

Meanwhile, according to another embodiment, the controller 460 may first provide the identification information of the connector to the server device, and then, when the server device transmits a port number corresponding to the identification information, cause the light emitting portion 430 corresponding to the port number to emit light and the user to easily find the corresponding port.

As above, FIG. 7 shows that the operation of the light emitting portion is controlled according to the control signal received through the server device, but when the coupling-type distribution device includes a memory (not shown), the controller 460 may determine the normal insertion position based on information stored in the memory.

In addition, although not shown in FIG. 7, the coupling-type distribution device 400 may further include a power supply portion (not shown). The power supply portion (not shown) may include power circuits that convert electrical signals provided from an external power source into standards usable by components in the coupling-type distribution device 400 and provide the converted electrical signals. Alternatively, the power supply portion may be implemented in a form that includes various batteries, and may be implemented in a form that receives power from a distribution box through the fastening portions 420-1 and 420-2.

In addition, various embodiments of the above-described coupling-type distribution device may be implemented as a distribution device itself, rather than being coupled to the distribution box through the fastening portions. In other words, a newly manufactured and installed distribution box may be manufactured and used to have the configuration described in the embodiments described above.

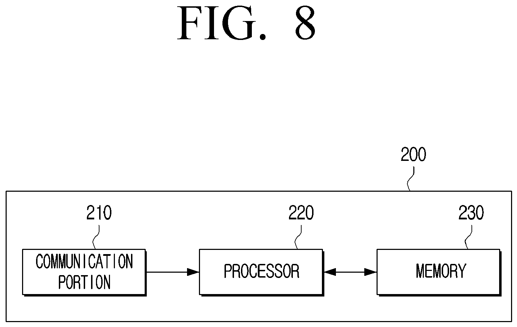

FIG. 8 is a block diagram showing a configuration of a server device according to an embodiment of the present disclosure. According to FIG. 8, the server device 200 includes a communication portion 210, a memory 230, and a processor 220.

The communication portion 210 is configured to receive various information by communicating with a distribution device according to various wired and wireless communication methods. Here, the distribution device may be not only the coupling-type distribution device described in FIGS. 2 to 6, but also a distribution device including a reader portion or a sensing portion. Hereinafter, it will be described collectively as a distribution device.

As described above, when a connector to which a tag with identification information recorded is attached is coupled to one of ports of the distribution device, the communication portion 210 may receive identification information and port information of the port to which the connector is coupled from the distribution device.

The memory 230 is configured to store various programs and data necessary for the operation of the server device 200. The memory 230 may store a line number sheet with respect to each distribution device managed by the server device 200.

The processor 220 generates the line number sheet with respect to the distribution device based on the received identification information and port information and stores the line number sheet in the memory 230. When receiving new information from the distribution device in which the existing line number sheet is stored, the processor 220 updates the line number sheet based on the received information.

The processor 220 transmits the line number sheet stored in the memory 230 to another terminal device according to a user's request. For example, the line number sheet may be transmitted to a mobile phone carried by field service personnel. Accordingly, it is possible to check a work schedule and a work list through a smart phone app until the field service personnel is dispatched to the site and arrives. In addition, as the field service personnel inserts each connector into the port in the distribution device, the processor 220 may store the progress in the line number sheet in real time. Therefore, it is easy to establish network construction and maintenance work plans and schedules in advance through a dedicated EMS.

The memory 230 may store reference port information for each connector. The processor 220 may determine whether the connector connection in the distribution device is incorrect based on the information stored in the memory 230. Specifically, the processor 220 detects reference port information corresponding to the received identification information from the memory 230 and then compares the reference port information with the port information received from the communication portion 210. When there is a difference as a result of the comparison, the processor 220 determines that the connector is incorrectly coupled. When it is determined that the connector is incorrectly coupled, the processor 220 transmits port information corresponding to the connector to the distribution device through the communication portion 210. Accordingly, the distribution device may induce normal coupling of the connector by checking a normal insertion position and causing a light emitting portion corresponding to the normal insertion position to emit light.

As such, the light emitting portion may be used to check and correct an error status in real time while checking a connection position of the connector with the naked eye. In particular, tasks such as access/connection unrelated to whether to open a service may also be performed.

Also, a manager of the server device 200 may also immediately identify the situation, and when an error occurs, may immediately notify service personnel of an alarm or instruct the service personnel to take action.

Meanwhile, the identification information recorded on the tag of the connector 300 may be issued directly at the site through the mobile phone or a separate terminal device carried by the field service personnel.

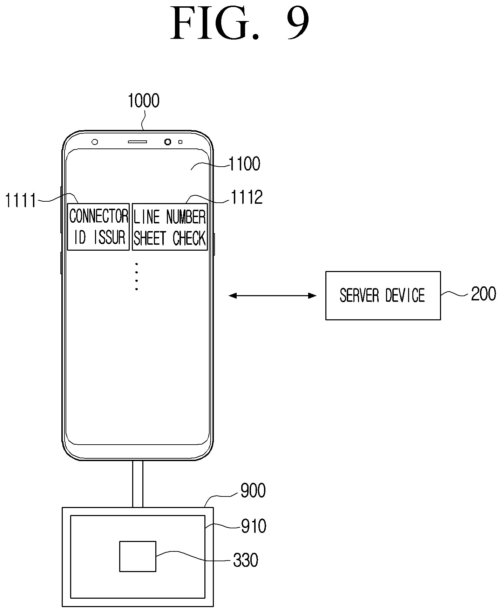

FIG. 9 is a configuration for explaining a method of recording identification information by using a terminal device. According to FIG. 9, a service personnel connects a terminal device 900 to his or her mobile phone 1000 and places the tag 330 in a specific region 910 on the terminal device 900.

The terminal device 900 includes an antenna for recording data on the tag 330. When the service personnel runs a specific app on his or her mobile phone 1000, the mobile phone 1000 displays an execution screen 1100 of the app. The execution screen 1100 displays various menus such as connector ID issue 1111, line number sheet check 1112, etc. When a user presses the connector ID issue 1111, the mobile phone 1000 requests identification information such as a connector ID from the server device 200. In this case, the mobile phone 1000 may provide distribution device information directly entered by the service personnel on the execution screen 1100 of the mobile phone 1000 to the server device 200. Alternatively, when the server device 200 provides distribution device information on site to perform a communication connection to the service personnel, and the service personnel moves to a position corresponding to the distribution device information and executes the app, the server device 200 may also be implemented to automatically recognize a port connection operation of the corresponding distribution device.

When the mobile phone 1000 does not include a component such as an antenna to perform a data use function, the service personnel may use the mobile phone 1000 by connecting the separate terminal device 900 to the mobile phone 1000 as shown in FIG. 9. When the service personnel places a sticker including the tag 330 on the terminal device 900 and presses the connector ID issue 1111, the terminal device 900 records the identification information provided through the mobile phone 1000 in the tag 330. The service personnel may attach the corresponding tag 330 to the connector and then couple the connector to the port of the distribution device.

FIG. 9 shows a case where the tag 330 is placed on the terminal device 900, but the tag 330 may also be implemented in a form that is inserted into the terminal device 900. Alternatively, the terminal device 900 may be implemented in a form that directly outputs a sticker with an identification information pattern printed thereon in the form of a QR code or a barcode.

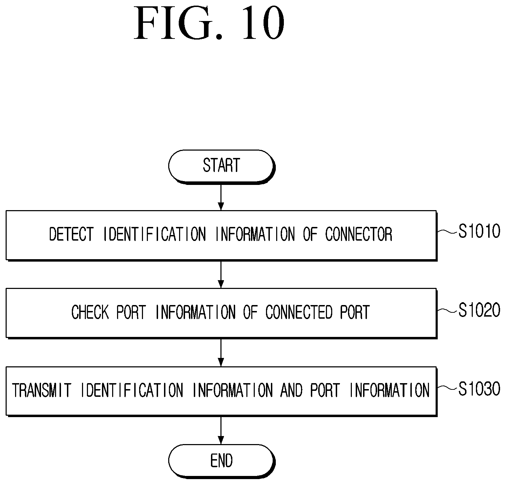

FIG. 10 is a flowchart for explaining a connector connecting method of a distribution device according to an embodiment of the present disclosure. According to FIG. 10, the distribution device detects identification information of a connector (S1010), checks port information of the connected port (S1020), and transmits each piece of information to a server device (S1030). The order of a port information checking step and an identification information detection step may be switched, and in the case of a structure including a plurality of readers installed for each opening, the port information checking step and the identification information detection step may be performed almost simultaneously. The transmitted information is used to generate and manage a line number sheet of the corresponding distribution device. The flowchart of FIG. 10 may be performed by the distribution devices of various configurations described in FIGS. 2 to 7, but is not limited thereto and may be performed by distribution devices of various configurations.

When the method of FIG. 10 is performed by a distribution device including a plurality of light emitting portions, the distribution device may adjust a blinking status of each light emitting portion by comparing an actual insertion position of the connector and a normal insertion position. For example, when the positions are the same, the distribution device causes a light emitting portion corresponding to the actual insertion position to emit light in a first color, and when the positions are different, causes a light emitting portion corresponding to the actual insertion position to emit light in a second color, and the light emitting portion corresponding to the normal insertion position to emit light in the first color. As described above, according an embodiment, a blinking pattern rather than a color may be changed.

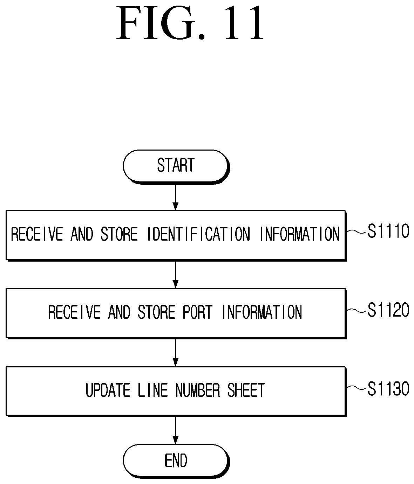

FIG. 11 is a flowchart for explaining a managing method of a server device according to an embodiment of the present disclosure. According to FIG. 11, when a connector to which a tag with identification information recorded is attached is coupled to one of ports of a distribution device, the server device receives and stores the identification information of the tag (S1 110). In addition, the server device also receives and stores port information (S 1 120). The order of receiving and storing each piece of information may be changed, or receiving and storing may be processed almost simultaneously.

The server device generates or updates a line number sheet with respect to the corresponding distribution device based on the received information (S 1130).

When a normal insertion position, that is, reference port information, is stored, the server device may determine whether the connector is incorrectly coupled by comparing the received identification information and port information with the previously stored reference port information. When it is determined that the connector is incorrectly coupled, the server device may transmit port information corresponding to the connector to the distribution device. Accordingly, the distribution device may be guided to insert the connector at the normal insertion position.

As described above, according to various embodiments of the present disclosure, it is possible to automatically generate and manage the line number sheet, thereby preventing a communication failure due to an error or omission in the line number sheet. In addition, it is possible to greatly improve a connection accuracy while greatly reducing the time spent in the field by service personnel who inspect and manage the actual distribution device.

In particular, when the distribution device is implemented in the form of a coupling-type distribution device, it is possible to perform operations according to an embodiment described above without removing and reinstalling currently installed distribution boxes.

Meanwhile, the above-described embodiment may be implemented in the form of a computer-readable recording medium that stores instructions and data executable by a computer. At least one of the instructions and data may be stored in the form of a program code, and when executed by a processor, may generate a predetermined program module and perform a predetermined operation.

Specifically, a program code that sequentially performs a step of reading a tag attached to each connector connected to a plurality of ports to detect identification information recorded on the tag, a step of transmitting the detected identification information to a server device, and a step of transmitting port information of the port to which the connector is connected to a server device may be stored and distributed in a computer-readable recording medium and mounted on a distribution device.

Alternatively, a program code that sequentially performs a step of receiving identification information from the distribution device, a step of receiving port information from the distribution device, and a step of generating and storing a line number sheet with respect to the distribution device based on the received identification information and port information may be stored and distributed in a computer-readable recording medium and mounted on a server device.

Accordingly, operations according to an embodiment described above may be performed.

Such computer-readable recording media include read-only memory (ROM), random-access memory (RAM), flash memory, CD-ROMs, CD-Rs, CD+Rs, CD-RWs, CD+RWs, DVD- ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magnetooptical data storage devices , optical data storage devices, hard disks, solid-status disks (SSDs), etc. In addition, the computer-readable recording media may be any devices that may store instructions or software, related data, data files, and data structures, and may provide instructions or software, related data, data files, and data structures to a processor or a computer to enable the processor or the computer to execute the instructions.

While the above has been illustrated and described with respect to an embodiment of the present disclosure, the disclosure is not limited to the above-described specific embodiment, and may be variously modified by those skilled in the pertinent art without departing from the gist of the disclosure as claimed in the claims, and such modifications may be within the scope of the claims.

## Claims

1. A coupling-type distribution device that may be coupled to a distribution box comprising a plurality of ports, the coupling-type distribution device comprising:
a main body formed with a fastening portion for fastening with the distribution box;
a plurality of openings distributed on the main body;
a reader portion configured to read a tag of a connector to be connected to one of the ports of the distribution box and detect identification information recorded on the tag through one of the plurality of openings while the main body is coupled to the distribution box by the fastening portion; and
a communication portion configured to transmit, to a server device, the identification information detected by the reader portion and port information of the port to which the connector is connected.

2. The coupling-type distribution device of claim 1, further comprising:
a plurality of sensing members provided on the main body so as to correspond to positions of the plurality of ports while the main body is coupled to the distribution box; and
a controller,
wherein each of the plurality of sensing members is configured to provide a signal according to insertion of the connector to the controller when the connector passes through a corresponding opening and is connected to the port,
the reader portion is disposed on one side of the main body, when the connector is tagged in the reader portion before being inserted into the corresponding opening, is configured to detect the identification information recorded on the tag of the connector, and provide the identification information to the controller , and
the controller is configured to transmit, to the server device, the identification information of the connector provided from the reader portion and port information corresponding to a position of each of the sensing members providing the signal through the communication portion.

3. The coupling-type distribution device of claim 1, wherein
a size of each of the plurality of openings is a size that covers at least one port, and
the reader portion includes a plurality of readers disposed on a side surface in a direction of the tag of the connector connected to each of the ports among inner side surfaces of the plurality of openings.

4. The coupling-type distribution device of claim 1, wherein the reader portion includes a plurality of readers respectively disposed on a plurality of protrusions protruding from peripheral surfaces of the plurality of openings on the main body.

5. The coupling-type distribution device of any one of claims 1 to 4, further comprising: a plurality of light emitting portions provided in the main body so as to correspond to arrangement positions of the plurality of ports,
wherein the controller is configured to cause a light emitting portion corresponding to the port into which the connector is inserted to emit light.

6. The coupling-type distribution device of claim 5, wherein
the controller is configured to cause,
when a normal insertion position of the connector and a position of the port into which the connector is inserted are the same, a light emitting portion corresponding to the port into which the connector is inserted to emit light in a first color, and
when the normal insertion position of the connector and the position of the port into which the connector is inserted are different, the light emitting portion corresponding to the port into which the connector is inserted to emit light in a second color, and a light emitting portion corresponding to the normal insertion position to emit light in the first color.

7. A server device for communicating with a distribution device, the server device comprising:
a communication portion;
a memory; and
a processor,
wherein the communication portion is configured to, when a connector to which a tag with identification information recorded is attached is coupled to one of ports of the distribution device, receive the identification information and port information of the port to which the connector is coupled from the distribution device, and
the processor is configured to generate a line number sheet with respect to the distribution device based on the received identification information and port information and store the line number sheet in the memory.

8. The server device of claim 7, wherein
the processor is configured to compare the received port information with reference port information stored in the memory, and, when it is determined that the connector is incorrectly coupled, transmit the port information corresponding to the connector to the distribution device through the communication portion.

9. A connector connecting method of a distribution device comprising a plurality of ports, the connector connecting method comprising:
reading a tag attached to each of connectors connected to the plurality of ports and detecting identification information recorded on the tags;
transmitting the detected identification information to a server device; and
transmitting port information of the port to which the connector is connected to the server device.

10. The connector connecting method of claim 9, further comprising: when an actual insertion position of the connector having the identification information is the same as a normal insertion position, causing a light emitting portion corresponding to the actual insertion position of the connector among a plurality of light emitting portions arranged for the plurality of ports to emit light in a first color, and when the actual insertion position is different from the normal insertion position, the light emitting portion corresponding to the actual insertion position to emit light in a second color, and a light emitting portion corresponding to the normal insertion position to emit light in the first color.

11. A managing method of a server device communicating with a distribution device, the managing method comprising:
when a connector to which a tag with identification information recorded is attached is coupled to one of ports of the distribution device, receiving the identification information from the distribution device;
receiving port information of the port to which the connector is coupled from the distribution device; and
generating and storing a line number sheet with respect to the distribution device based on the received identification information and port information.

12. The managing method of claim 11, further comprising: comparing the received port information with previously stored reference port information, and, when it is determined that the connector is incorrectly coupled, transmitting the port information corresponding to the connector to the distribution device.
